# EUROPEAN PATENT APPLICATION

(11) **EP 3 699 019 A1**
(43) Date of publication of application: **26.08.2020**
(21) Application number: 18865565.8
(22) Date of filing: 10.08.2018
(51) Int. Cl.: B60L 50/50

(54) **ELECTRIC CAR CHARGING METHOD AND SYSTEM USING CERTIFICATE-BASED MANAGEMENT**

(30) Priority: 10.10.2017 CN 201710935881
(71) Applicant: Nio Nextev Limited, Central, Hong Kong (CN)
(72) Inventor: MA, Shijie, Shanghai 201804 (CN)
(74) Representative: Vossius & Partner Patentanwälte Rechtsanwälte mbB
(86) International application number: PCT/CN2018/100032
(87) International publication number: WO 2019/072011

(57) **Abstract**

The present invention relates to a electric vehicle charging method and system based on certificate management. The method includes: obtaining charging information, and generating a certificate of entitlement according to the obtained charging information; applying to obtain the certificate of entitlement; and obtaining the certificate of entitlement, and executing a charging behavior according to the certificate of entitlement. The present invention adopts a technical means that is not limited by time, can be traced and cannot be denied for exchanging charging certificate of entitlement documents to ensure that the unique legality of an original charging request file can be traced at any time in the future, evidence provision can be performed according to legal requirements, and the problem of credibility among multiple operators is also solved. In addition, a user can operate the charging device according to reserved procedures through certificate exchange, the operation can be automatically generated by the system, and the user can use a charging pile without manual operation, thereby optimizing the user experience.

## Description

### Field of the Invention

The present invention relates to the technical field of electric vehicle charging, in particular to an electric vehicle charging method and system based on certificate management.

### Background of the Invention

Electric vehicles can be driven by electrical energy stored in batteries to move, which reduces the dependence of the vehicles on fossil energy and is an important means to solve the national energy security problem. Power batteries are the cores of the vehicles with power supply systems, but the cruising ability of the batteries are far from that of traditional vehicles. Therefore, how to quickly and easily supplement the power batteries with electric energy becomes an important factor for the use and promotion of electric vehicles. During the charging process of the existing electric vehicles, onsite manual control or remote control of charging piles by means of mobile phone application programs are needed, and the purpose of charging the electric vehicles is finally achieved. With the large-scale development of the electric vehicles, the information exchange between vehicle piles, especially payment, pile guidance and application program downloading, must all rely on network synchronization, so the existing electric vehicle charging systems at least have the following disadvantages:
(1) when operators manage charging devices, even if the charging devices are installed in non-signal basements or other harsh conditions, the charging devices need to meet the stability of network communication through relay means in real time, so the cost is high, and it is impossible to connect to the network to achieve charging, so the convenience is poor.
(2) Electric vehicle owners must bring mobile phones and install application programs provided by the operators or their related partners, and these programs themselves also need to be completed in advance before charging, and they must also be connected to the Internet during use, therefore the charging efficiency is low, and the user experience is poor.
(3) Vehicle-mounted electronic devices cannot download third-party application programs at any time, and if the Internet of Vehicles charging manner is used, the vehicle-mounted electronic devices can only be used in closed systems of enterprises, which has limitations.
(4) The data storage manner of the existing charging system for vehicle authentication has poor traceability and cannot provide evidence that meets the legal requirements, which also causes the problem of poor credibility among the operators.

### Summary of the Invention

The technical problem to be solved by the present invention is to provide an electric vehicle charging method and system based on certificate management, the method and system adopt a technical means that is not limited by time, can be traced and cannot be denied for exchanging charging certificate of entitlement documents to ensure that the unique legality of an original charging request file can be traced at any time in the future, non-repudiation evidence provision can be performed according to legal requirements, and the problem of credibility among multiple operators is also solved. In addition, a user can operate the charging device according to reserved procedures through certificate exchange, the service operation can be automatically generated by the system, and the user can use a charging pile without manual operation, thereby optimizing the user experience.

In order to solve the above technical problem, according to one aspect of the present invention, an electric vehicle charging method based on certificate management is provided, including the following steps:
obtaining charging information, and generating a certificate of entitlement according to the obtained charging information;
applying to obtain the certificate of entitlement; and
obtaining the certificate of entitlement, and executing a charging behavior according to the certificate of entitlement.

Further, the method further includes:
obtaining, by a certificate management server, the charging information, and generating the certificate of entitlement according to the obtained charging information;
applying, by a target storage device, for the certificate management server to obtain the certificate of entitlement; and
communicating, by a charging device, with the target storage device to obtain the certificate of entitlement, and executing the charging behavior according to the certificate of entitlement.

Further, the generating the generating the certificate of entitlement according to the obtained charging information includes the following steps:
obtaining, by the certificate management server, key information and corresponding public key information from a third-party institution according to the charging information to generate certificate request data;
singing, by the certificate management server, the certificate request data to generate credential request data;
singing, by the third-party institution, the credential request data to generate certificate information, and sending the certificate information to the certificate management server; and
calling, by the certificate management server, the public key information corresponding to the certificate information to verify the certificate information, and generating the certificate of entitlement after the verification is passed.

Further, the applying, by the target storage device, to the certificate management server to obtain the certificate of entitlement includes the following steps:
submitting, by the target storage device, a certificate application request to the certificate management server;
verifying, by the certificate management server, the legality of the identity of the target storage device, and sending the certificate of entitlement to the target storage device after the verification is passed; and
singing, by the target storage device, the certificate of entitlement, and storing the signature information of the target storage device and the certificate of entitlement.

Further, the verification of the legality of the identity of the target storage device by the certificate management server includes one or more of the following verification modes: password account verification, digital credential verification, dynamic token verification, and short message verification.

Further, the communicating, by the charging device, with the target storage device to obtain the certificate of entitlement, and executing the charging behavior according to the certificate of entitlement includes the following steps:
establishing, by the charging device, a communication connection with the target storage device;
sending, by the target storage device, the information of the certificate of entitlement and the signature information of the target storage device to the charging device;
authenticating, by the charging device, the target storage device according to the signature information of the target storage device, and verifying the validity of the certificate of entitlement; and
executing the charging behavior according to the certificate of entitlement after the verification is passed.

Further, the method further includes:
obtaining standard time source information, and performing time signature on the certificate of entitlement according to the standard time source information.

Further, the method further includes:
performing cancellation after verification on the certificate of entitlement in which the charging behavior is completed.

Further, the charging information includes one or more of charging time, charging amount, charging electric quantity, and an ID number corresponding to the operator of the charging device; and the certificate of entitlement includes the charging information, a validity period of the certificate, and a corresponding service serial number.

Further, the target storage device is a vehicle-mounted electronic device, an electronic device accessed by a vehicle-mounted interface, a mobile phone, or a tablet computer.

Further, the communication mode between the target storage device and the charging device includes Wifi, Bluetooth, Zigbee, NFC or RFID.

According to another aspect of the present invention, an electric vehicle charging system based on certificate management is provided, including:
a certificate management server, configured to obtain charging information, and generate a certificate of entitlement according to the obtained charging information;
a target storage device, configured to apply for the certificate management server to obtain the certificate of entitlement; and
a charging device, configured to communicate with the target storage device to obtain the certificate of entitlement, and execute a charging behavior according to the certificate of entitlement.

Further, the certificate management server includes: a certificate request data generation module, configured to obtain key information and corresponding public key information from a third-party institution according to the charging information to generate certificate request data;
a credential request data generation module, configured to sign the certificate request data to generate credential request data;
a certificate information generation module, configured to sign the credential request data through the third-party institution to generate certificate information; and
a certificate of entitlement generation module, configured to call the public key information corresponding to the certificate information to verify the certificate information, and generate the certificate of entitlement after the verification is passed.

Further, the target storage device includes:
a certificate application module, configured to submit a certificate application request to the certificate management server;
a signature module, configured to sign the certificate of entitlement;
a storage module, configured to store the signature information of the target storage device and the certificate of entitlement.

Further, the certificate management server further includes an identity verification module, configured to verify the legality of the identity of the target storage device, and the verification includes one or more of the following verification modes: password account verification, digital credential verification, dynamic token verification, and short message verification.

Further, the charging device includes:
a communication module, configured to establish a communication connection with the target storage device;
an information receiving module, configured to receive the information of the certificate of entitlement and the signature information of the target storage device sent by the target storage device;
a verification module, configured to authenticate the target storage device according to the signature information of the target storage device, and verify the validity of the certificate of entitlement; and
a charging module, configured to execute the charging behavior according to the certificate of entitlement after the verification is passed.

Further, the system further includes a time checking module, configured to obtain standard time source information, and perform time signature on the certificate of entitlement according to the standard time source information.

Further, the system further includes a certificate cancellation after verification module, configured to perform cancellation after verification on the certificate of entitlement in which the charging behavior is completed.

Further, the charging information includes one or more of charging time, charging amount, charging electric quantity, and an ID number corresponding to the operator of the charging device; and the certificate of entitlement includes the charging information, a validity period of the certificate, and a corresponding service serial number.

Further, the target storage device is a vehicle-mounted electronic device, an electronic device accessed by a vehicle-mounted interface, a mobile phone, or a tablet computer.

Further, the communication mode between the target storage device and the charging device includes Wifi, Bluetooth, Zigbee, NFC or RFID.

According to yet another aspect of the present invention, a controller is provided, including a memory and a processor, wherein the memory stores a computer program, and the program can implement the steps of the method when executed by the processor.

According to yet another aspect of the present invention, a computer-readable storage medium is provided for storing a computer program, wherein the program can implement the steps of the method when executed by a computer or a processor.

Compared with the prior art, the present invention has obvious advantages and beneficial effects. By means of the above technical solutions, the electric vehicle charging method and system based on certificate management of the present invention can achieve considerable technological advancement and practicability, and have wide industrial utilization values, and at least have the following advantages:
(1) the digital certificate formed by a digital signature file does not require the negotiation of the charging process between the vehicle and the charging device, so that the security is high, and no application program needs to be downloaded, so the charging process is convenient and efficient.
(2) The present invention is applicable to different charging vehicle models and charging devices and does not limit the vehicle models or the charging devices, and the user only needs to obtain the certificate to realize charging.
(3) The certificate itself requires only a few kilobytes of data, and a third-party application program requires at least a few tens of megabytes of traffic, so that the present invention can save the traffic and memory for the user.
(4) Each charging process has signature information, and the signing party is traceable, thereby ensuring that the unique legality of an original charging request file can be traced at any time in the future, non-repudiation evidence provision can be performed according to legal requirements, and the problem of credibility among multiple operators is also solved.
(5) The present invention can also avoid the necessity of real-time synchronization to connect to the Internet when the target storage device interacts with the charging device, and can also realize local exchange of certificates.
(6) The user can operate the charging device according to reserved procedures through certificate exchange, the service operation can be automatically generated by the system, and the user can use a charging pile without manual operation, thereby optimizing the user experience.

The above description is only an overview of the technical solutions of the present invention. In order understand the technical means of the present invention more clearly, the present invention can be implemented in accordance with the contents of the specification, and in order to make the above and other objects, features and advantages of the present invention more obvious and understandable, preferred embodiments are listed below and are descried in detail below in combination with drawings.

### Brief Description of the Drawings

Fig 1 is a flow diagram of an electric vehicle charging method based on certificate management provided by an embodiment of the present invention;
Fig. 2 is a schematic diagram of an electric vehicle charging system based on certificate management provided by an embodiment of the present invention.

### Detailed Description of the Embodiments

In order to further illustrate the technical means and effects adopted in the present invention to achieve the intended purpose of the invention, specific embodiments and effects of an electric vehicle charging method and system based on certificate management proposed in accordance with the present invention are described in detail below, in conjunction with the drawings and preferred embodiments.

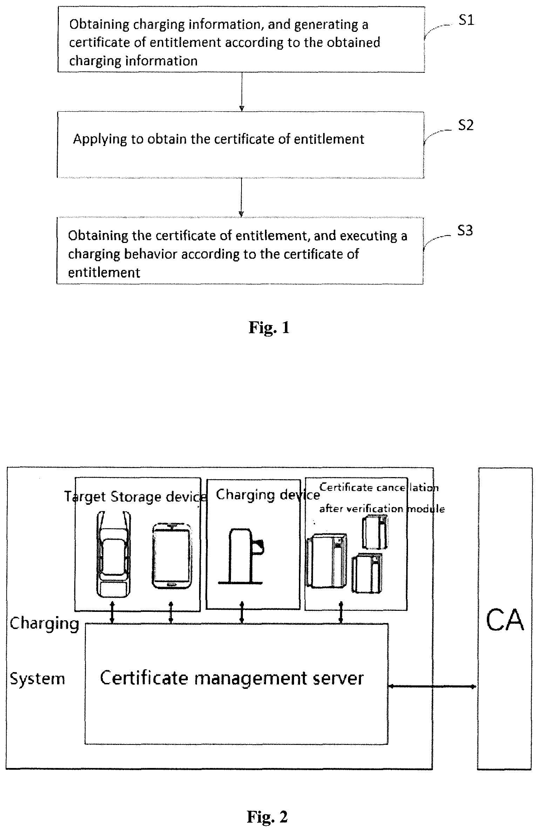

As shown in Fig. 1, the present invention provides an electric vehicle charging method based on certificate management, including the following steps:
S1. obtaining charging information, and generating a certificate of entitlement according to the obtained charging information; and
   a certificate management server obtains the charging information, and generates the certificate of entitlement according to the obtained charging information; the charging information includes one or more of charging time, charging amount, charging electric quantity, and an ID number corresponding to the operator of the charging device, the charging information is not limited to the above information, but can also include other related charging information; and the certificate of entitlement includes the charging information, a validity period of the certificate, and a corresponding service serial number, the certificate of entitlement is not limited to the above information, but can include other relevant certificate information based on specific application needs.
S2. applying to obtain the certificate of entitlement;
   a target storage device applies for the certificate management server to obtain the certificate of entitlement; and
   during the charging process of an electric vehicle, corresponding to the storage device, the storage device also corresponds to the identity information of the vehicle, the target storage device is a vehicle-mounted electronic device, an electronic device accessed by a vehicle-mounted interface, a mobile phone, or a tablet computer, the target storage device is not limited to the several devices mentioned above, and other devices that can realize certificate storage and communication with charging devices are suitable for the present invention.
S3. Obtaining the certificate of entitlement, and executing a charging behavior according to the certificate of entitlement.

A charging device communicates with the target storage device to obtain the certificate of entitlement, and executes the charging behavior according to the certificate of entitlement.

The communication between the target storage device and the charging device is initiated by the target storage device or by the charging device.

The charging device includes DC charging piles, AC charging piles, DC charging machines, AC charging machines, or mobile charging vehicles, and the like.

The communication mode between the target storage device and the charging device includes Wifi, Bluetooth, Zigbee (low power consumption LAN protocol based on the IEEE802.15.4 standard), NFC (near field communication technology, Near Field Communication) or RFID (radio frequency identification, Radio Frequency Identification), the target storage device and the charging device components can communicate through the Internet, or can communicate without the Internet. In inconvenient network environments such as a basement with poor signals, charging can also be achieved, thereby being more convenient and improving the user experience.

The step S1 includes the following steps:
S101. the certificate management server obtains key information and corresponding public key information from a third-party institution according to the charging information to generate certificate request data; and
the third-party institution is a CA institution (the CA institution is also known as a CA center, that is, a credential authorization center, or a credential authorization institution, serves as a trusted third party in e-commerce transactions and undertakes the responsibility of verifying the legality of public keys in a public key system). For example, the China Financial Certification Authority (CFCA), the China Telecom Certification Center (CTCA), the Customs Certification Center (SCCA), the Guofuan CA Security Certification Center established by the Ministry of Foreign Trade EDI, the "Net Securities" certification system headed by the Guangdong E-commerce Certification Center, the UCA UCA Association Card Certification System headed by the SHECA (Shanghai CA), etc.

S102. the certificate management server signs the certificate request data to generate credential request data;

S103. the third-party institution signs the credential request data to generate certificate information, and sends the certificate information to the certificate management server; and S104. the certificate management server calls the public key information corresponding to the certificate information to verify the certificate information, and generates the certificate of entitlement after the verification is passed.

The step S2 includes the following steps:
S201. the target storage device submits a certificate application request to the certificate management server;
S202. the certificate management server verifies the legality of the identity of the target storage device, and sends the certificate of entitlement to the target storage device after the verification is passed; and
S203. the target storage device signs the certificate of entitlement, and stores the signature information of the target storage device and the certificate of entitlement.

In step S202, the verification of the legality of the identity of the target storage device by the certificate management server includes one or more of the following verification modes: password account verification, digital credential verification, dynamic token verification, and short message verification.

The step S3 includes the following steps:
Step S301. the charging device establishes a communication connection with the target storage device;
Step S302. the target storage device sends the information of the certificate of entitlement and the signature information of the target storage device to the charging device; and

After receiving the certificate, the charging device can send receipt information to the target storage device in the manner of a mobile phone text message, a mobile phone application program, or display on a vehicle-mounted device.

Step S303. the charging device authenticates the target storage device according to the signature information of the target storage device, and verifies the validity of the certificate of entitlement; and
the authentication of the target storage device includes verifying the identity information of the target storage device, and in actual use, the identity information of the charging vehicle is verified by verifying the identity information of the target storage device; and the verification of the validity of the right certificate includes verifying the charging information and time information or the like included in the certificate of entitlement, for example, whether the certificate of entitlement is still within the validity period, and so on.

Step S304. the charging behavior is executed according to the certificate of entitlement after the verification is passed.

It should be noted that the signature process involved in the method is not limited to the signature of the device itself, the third-party institution entrusted by the device can also perform the signature, as long as the identity information can be proved and the traceability of the service process can be ensured. In all signing processes, private key information are stored and cryptographic operations are provided by an integrated cryptographic chip (the cryptographic chip must be a cryptographic product approved by the National Cryptography Administration).

In the method, all data transmission adopts a unified data format and a data transmission protocol.

In order to ensure the time accuracy of the entire service process, the method further includes: step S5. obtaining standard time source information, and performing time signature on the certificate of entitlement according to the standard time source information. The time signature can be performed by a third-party institution that has credibility and can provide the standard time source information.

The method further includes: step S6. performing cancellation after verification on the certificate of entitlement in which the charging behavior is completed. Settlement registration can also be perform through the certificate of entitlement.

The step S6 includes the following steps:
S601. the charging device interacts with the certificate management server;
S602: the certificate management server executes step S603 after the legal user login verification of the identity of the charging device is passed;
S603. the certificate management server obtains at least one of an original certificate of entitlement and target device receipt information.
S604. the certificate management server verifies the legality of the received original certificate of entitlement and/or the target device receipt information, and executes step S605 after the verification is passed;
S605. cancellation after verification is performed on the certificate of entitlement, and the state corresponding to the certificate of entitlement is changed into a used state.

The digital certificate formed by a digital signature file in the method of the present embodiment does not require the negotiation of the charging process between the vehicle and the charging device, so that the security is high, and no application program needs to be downloaded, so the charging process is convenient and efficient. The method is applicable to different charging vehicle models and charging devices and does not limit the vehicle models or the charging devices, and the user only needs to obtain the certificate to realize charging. Furthermore, the certificate itself requires only a few kilobytes of data, and a third-party application program requires at least a few tens of megabytes of traffic, so that the present invention can save the traffic and memory for the user. In addition, in the method, each charging process has signature information, and the signing party is traceable, thereby ensuring that the unique legality of an original charging request file can be traced at any time in the future, non-repudiation evidence provision can be performed according to legal requirements, and the problem of credibility among multiple operators is also solved.The present invention can also avoid the necessity of real-time synchronization to connect to the Internet when the target storage device interacts with the charging device, and can also realize local exchange of certificates. The user can operate the charging device according to reserved procedures through certificate exchange, the service operation can be automatically generated by the system, and the user can use a charging pile without manual operation, thereby optimizing the user experience.

As shown in Fig.2, the embodiment of the present invention further provides an electric vehicle charging system based on certificate management, including:
a certificate management server, configured to obtain charging information, and generate a certificate of entitlement according to the obtained charging information; the charging information includes one or more of charging time, charging amount, charging electric quantity, and an ID number corresponding to the operator of the charging device, the charging information is not limited to the above information, but can also include other related charging information; and the certificate of entitlement includes the charging information, a validity period of the certificate, and a corresponding service serial number, the certificate of entitlement is not limited to the above information, but can include other relevant certificate information based on specific application needs.

A target storage device, configured to apply for the certificate management server to obtain the certificate of entitlement; and
during the charging process of an electric vehicle, corresponding to the storage device, the storage device also corresponds to the identity information of the vehicle, the target storage device is a vehicle-mounted electronic device, an electronic device accessed by a vehicle-mounted interface, a mobile phone, or a tablet computer, the target storage device is not limited to the several devices mentioned above, and other devices that can realize certificate storage and communication with charging devices are suitable for the present invention.

A charging device, configured to communicate with the target storage device to obtain the certificate of entitlement, and execute a charging behavior according to the certificate of entitlement.

The communication between the target storage device and the charging device is initiated by the target storage device or by the charging device.

The charging device includes DC charging piles, AC charging piles, DC charging machines, AC charging machines, or mobile charging vehicles, and the like.

The communication mode between the target storage device and the charging device includes Wifi, Bluetooth, Zigbee (low power consumption LAN protocol based on the IEEE802.15.4 standard), NFC (near field communication technology, Near Field Communication) or RFID (radio frequency identification, Radio Frequency Identification), the target storage device and the charging device components can communicate through the Internet, or can communicate without the Internet. In inconvenient network environments such as a basement with poor signals, charging can also be achieved, thereby being more convenient and improving the user experience.

Preferably, the certificate management server includes: a certificate request data generation module, configured to obtain key information and corresponding public key information from a third-party institution according to the charging information to generate certificate request data; and
the third-party institution is a CA institution (the CA institution is also known as a CA center, that is, a credential authorization center, or a credential authorization institution, serves as a trusted third party in e-commerce transactions and undertakes the responsibility of verifying the legality of public keys in a public key system). For example, the China Financial Certification Authority (CFCA), the China Telecom Certification Center (CTCA), the Customs Certification Center (SCCA), the Guofuan CA Security Certification Center established by the Ministry of Foreign Trade EDI, the "Net Securities" certification system headed by the Guangdong E-commerce Certification Center, the UCA UCA Association Card Certification System headed by the SHECA (Shanghai CA), etc.

A credential request data generation module, configured to sign the certificate request data to generate credential request data;
a certificate information generation module, configured to sign the credential request data through the third-party institution to generate certificate information; and
a certificate of entitlement generation module, configured to call the public key information corresponding to the certificate information to verify the certificate information, and generate the certificate of entitlement after the verification is passed.

The target storage device includes:
a certificate application module, configured to submit a certificate application request to the certificate management server;
a signature module, configured to sign the certificate of entitlement;
a storage module, configured to store the signature information of the target storage device and the certificate of entitlement.

The certificate management server further includes an identity verification module, configured to verify the legality of the identity of the target storage device, and the verification includes one or more of the following verification modes: password account verification, digital credential verification, dynamic token verification, and short message verification.

The charging device includes:
a communication module, configured to establish a communication connection with the target storage device;
an information receiving module, configured to receive the information of the certificate of entitlement and the signature information of the target storage device sent by the target storage device; and
After receiving the certificate, the charging device can send receipt information to the target storage device in the manner of a mobile phone text message, a mobile phone application program, or display on a vehicle-mounted device.

A verification module, configured to authenticate the target storage device according to the signature information of the target storage device, and verify the validity of the certificate of entitlement; and
the authentication of the target storage device includes verifying the identity information of the target storage device, and in actual use, the identity information of the charging vehicle is verified by verifying the identity information of the target storage device; and the verification of the validity of the right certificate includes verifying the charging information and time information or the like included in the certificate of entitlement, for example, whether the certificate of entitlement is still within the validity period, and so on.

A charging module, configured to execute the charging behavior according to the certificate of entitlement after the verification is passed.

It should be noted that the signature process involved in the method is not limited to the signature of the device itself, the third-party institution entrusted by the device can also perform the signature, as long as the identity information can be proved and the traceability of the service process can be ensured. In all signing processes, private key information are stored and cryptographic operations are provided by an integrated cryptographic chip (the cryptographic chip must be a cryptographic product approved by the National Cryptography Administration).

All data transmission of the system adopts a unified data format and a data transmission protocol.

In order to ensure the time accuracy of the entire service process, the system further includes a time checking module, configured to obtain standard time source information, and perform time signature on the certificate of entitlement according to the standard time source information. The time signature can be performed by a third-party institution that has credibility and can provide the standard time source information.

The system further includes a certificate cancellation after verification module, configured to perform cancellation after verification on the certificate of entitlement in which the charging behavior is completed. The certificate cancellation after verification module includes: an information interaction unit, configured to realize the interaction between the charging device and the certificate management server;
a first verification unit, configured to perform legal user login verification on the identity of the charging device; and
an information obtaining unit, configured to obtain at least one of an original certificate of entitlement and target device receipt information.

A second verification unit, configured to verify the legality of the received original certificate of entitlement and/or the target device receipt information; and
a cancellation after verification unit, configured to perform cancellation after verification on the certificate of entitlement, and change the state corresponding to the certificate of entitlement into a used state.

The digital certificate formed by a digital signature file in the system of the present embodiment does not require the negotiation of the charging process between the vehicle and the charging device, so that the security is high, and no application program needs to be downloaded, so the charging process is convenient and efficient. The system is applicable to different charging vehicle models and charging devices and does not limit the vehicle models or the charging devices, and the user only needs to obtain the certificate to realize charging. Furthermore, the certificate itself requires only a few kilobytes of data, and a third-party application program requires at least a few tens of megabytes of traffic, so that the present invention can save the traffic and memory for the user. In addition, in the system, each charging process has signature information, and the signing party is traceable, thereby ensuring that the unique legality of an original charging request file can be traced at any time in the future, non-repudiation evidence provision can be performed according to legal requirements, and the problem of credibility among multiple operators is also solved. The present invention can also avoid the necessity of real-time synchronization to connect to the Internet when the target storage device interacts with the charging device, and can also realize local exchange of certificates. The user can operate the charging device according to reserved procedures through certificate exchange, the service operation can be automatically generated by the system, and the user can use a charging pile without manual operation, thereby optimizing the user experience.

The embodiment of the present invention further provides a controller, including a memory and a processor, wherein the memory stores a computer program, and the program can implement the steps of the method when executed by the processor.

The embodiment of the present invention further provides a computer-readable storage medium, for storing a computer program, wherein the program can implement the steps of the method when executed by a computer or a processor.

The above descriptions are only the preferred embodiments of the present invention, and do not limit the present invention in any form. Although the present invention has been disclosed in the preferred embodiments as above, the preferred embodiments are not used for limiting the present invention, anyone skilled familiar with this art can make some changes or modifications by using the technical contents disclosed above to serve as equivalent embodiments of equivalent changes, without departing from the scope of the technical solutions of the present invention, and any simple modifications, equivalent changes and modifications made to the above embodiments according to the technical essence of the present invention, without departing from the contents of the technical solutions of the present invention, still fall within the scope of the technical solutions of the present invention.

## Claims

1. An electric vehicle charging method based on certificate management, comprising the following steps:
obtaining charging information, and generating a certificate of entitlement according to the obtained charging information;
applying to obtain the certificate of entitlement; and
obtaining the certificate of entitlement, and executing a charging behavior according to the certificate of entitlement.

2. The electric vehicle charging method based on certificate management according to claim 1, wherein the method further comprises:
obtaining, by a certificate management server, the charging information, and generating the certificate of entitlement according to the obtained charging information;
applying, by a target storage device, for the certificate management server to obtain the certificate of entitlement; and
communicating, by a charging device, with the target storage device to obtain the certificate of entitlement, and executing the charging behavior according to the certificate of entitlement.

3. The electric vehicle charging method based on certificate management according to claim 2, wherein:
the generating the generating the certificate of entitlement according to the obtained charging information comprises the following steps:
obtaining, by the certificate management server, key information and corresponding public key information from a third-party institution according to the charging information to generate certificate request data;
singing, by the certificate management server, the certificate request data to generate credential request data;
singing, by the third-party institution, the credential request data to generate certificate information, and sending the certificate information to the certificate management server; and
calling, by the certificate management server, the public key information corresponding to the certificate information to verify the certificate information, and generating the certificate of entitlement after the verification is passed.

4. The electric vehicle charging method based on certificate management according to claim 2, wherein:
the applying, by the target storage device, to the certificate management server to obtain the certificate of entitlement comprises the following steps:
submitting, by the target storage device, a certificate application request to the certificate management server;
verifying, by the certificate management server, the legality of the identity of the target storage device, and sending the certificate of entitlement to the target storage device after the verification is passed; and
singing, by the target storage device, the certificate of entitlement, and storing the signature information of the target storage device and the certificate of entitlement.

5. The electric vehicle charging method based on certificate management according to claim 4, wherein:
the verification of the legality of the identity of the target storage device by the certificate management server comprises one or more of the following verification modes: password account verification, digital credential verification, dynamic token verification, and short message verification.

6. The electric vehicle charging method based on certificate management according to claim 2, wherein:
the communicating, by the charging device, with the target storage device to obtain the certificate of entitlement, and executing the charging behavior according to the certificate of entitlement comprises the following steps:
establishing, by the charging device, a communication connection with the target storage device;
sending, by the target storage device, the information of the certificate of entitlement and the signature information of the target storage device to the charging device;
authenticating, by the charging device, the target storage device according to the signature information of the target storage device, and verifying the validity of the certificate of entitlement; and
executing the charging behavior according to the certificate of entitlement after the verification is passed.

7. The electric vehicle charging method based on certificate management according to claim 1, wherein:
the method further comprises:
obtaining standard time source information, and performing time signature on the certificate of entitlement according to the standard time source information.

8. The electric vehicle charging method based on certificate management according to claim 1, wherein:
the method further comprises:
performing cancellation after verification on the certificate of entitlement in which the charging behavior is completed.

9. The electric vehicle charging method based on certificate management according to any of claims 1-8, wherein:
the charging information comprises one or more of charging time, charging amount, charging electric quantity, and an ID number corresponding to the operator of the charging device; and
the certificate of entitlement comprises the charging information, a validity period of the certificate, and a corresponding service serial number.

10. The electric vehicle charging method based on certificate management according to any of claims 1-8, wherein:
the target storage device is a vehicle-mounted electronic device, an electronic device accessed by a vehicle-mounted interface, a mobile phone, or a tablet computer.

11. The electric vehicle charging method based on certificate management according to any of claims 1-8, wherein:
the communication mode between the target storage device and the charging device comprises Wifi, Bluetooth, Zigbee, NFC or RFID.

12. An electric vehicle charging system based on certificate management, comprising:
a certificate management server, configured to obtain charging information, and generate a certificate of entitlement according to the obtained charging information;
a target storage device, configured to apply for the certificate management server to obtain the certificate of entitlement; and
a charging device, configured to communicate with the target storage device to obtain the certificate of entitlement, and execute a charging behavior according to the certificate of entitlement.

13. The electric vehicle charging system based on certificate management according to claim 12, wherein:
the certificate management server comprises: a certificate request data generation module,
configured to obtain key information and corresponding public key information from a third-party institution according to the charging information to generate certificate request data;
a credential request data generation module, configured to sign the certificate request data to generate credential request data;
a certificate information generation module, configured to sign the credential request data through the third-party institution to generate certificate information; and
a certificate of entitlement generation module, configured to call the public key information corresponding to the certificate information to verify the certificate information, and generate the certificate of entitlement after the verification is passed.

14. The electric vehicle charging system based on certificate management according to claim 12, wherein:
the target storage device comprises:
a certificate application module, configured to submit a certificate application request to the certificate management server;
a signature module, configured to sign the certificate of entitlement;
a storage module, configured to store the signature information of the target storage device and the certificate of entitlement.

15. The electric vehicle charging system based on certificate management according to claim 14, wherein:
the certificate management server further comprises an identity verification module,
configured to verify the legality of the identity of the target storage device, and the verification comprises one or more of the following verification modes: password account verification, digital credential verification, dynamic token verification, and short message verification.

16. The electric vehicle charging system based on certificate management according to claim 12, wherein:
the charging device comprises:
a communication module, configured to establish a communication connection with the target storage device;
an information receiving module, configured to receive the information of the certificate of entitlement and the signature information of the target storage device sent by the target storage device;
a verification module, configured to authenticate the target storage device according to the signature information of the target storage device, and verify the validity of the certificate of entitlement; and
a charging module, configured to execute the charging behavior according to the certificate of entitlement after the verification is passed.

17. The electric vehicle charging system based on certificate management according to claim 12, wherein:
the system further comprises a time checking module, configured to obtain standard time source information, and perform time signature on the certificate of entitlement according to the standard time source information.

18. The electric vehicle charging system based on certificate management according to claim 12, wherein:
the system further comprises a certificate cancellation after verification module, configured to perform cancellation after verification on the certificate of entitlement in which the charging behavior is completed.

19. The electric vehicle charging system based on certificate management according to any of claims 12-18, wherein:
the charging information comprises one or more of charging time, charging amount, charging electric quantity, and an ID number corresponding to the operator of the charging device; and
the certificate of entitlement comprises the charging information, a validity period of the certificate, and a corresponding service serial number.

20. The electric vehicle charging system based on certificate management according to any of claims 12-18, wherein:
the target storage device is a vehicle-mounted electronic device, an electronic device accessed by a vehicle-mounted interface, a mobile phone, or a tablet computer.

21. The electric vehicle charging system based on certificate management according to any of claims 12-18, wherein:
the communication mode between the target storage device and the charging device comprises Wifi, Bluetooth, Zigbee, NFC or RFID.

22. A controller is provided, comprising a memory and a processor, wherein the memory stores a computer program, and the program can implement the steps of the method according to any of claims 1-11 when executed by the processor.

23. A computer-readable storage medium for storing a computer program, wherein the program can implement the steps of the method according to any of claims 1-11 when executed by a computer or a processor.
